# EUROPEAN PATENT APPLICATION

(11) **EP 0 968 854 A1**
(43) Date of publication of application: **05.01.2000**
(21) Application number: 99304547.5
(22) Date of filing: 10.06.1999
(51) Int. Cl.: B60G 21/05, B60G 7/02

(54) **Vehicle rear suspensions**

(30) Priority: 30.06.1998 GB 9813993
(71) Applicant: ROVER GROUP LIMITED, Warwick, Warwickshire CV34 6RG (GB)
(72) Inventor: Griffiths, Adrian Michael, Henley-in-Arden, Solihull B95 5ED (GB); Conroy, Gerald, Warwickshire CV37 0DX (GB)
(74) Representative: Wilson, Alan Stuart

(57) **Abstract**

In a torsion beam suspension with bushes 24 which are inclined to the transverse axis of the vehicle to reduce over-steer during cornering, snubbing devices are provided comprising a pair of snubbing surfaces 30, 34 which come into contact at high lateral accelerations to limit lateral movement of the longitudinal arms 10, 12, the snubbing surfaces being angled to the longitudinal axis of the vehicle so that they reduce over-steer at high lateral accelerations.

## Description

The present invention relates to torsion bar or H-frame rear suspensions in which a pair of longitudinal arms are provided each being pivotably mounted to the vehicle body or chassis at the front end and having one of the vehicle rear wheels mounted on the rear end, and the longitudinals are joined by a transverse bar or beam connected to each of them at a point between their front and rear ends.

It is known in this type of suspension, for example from WO97/12773 to mount the longitudinals onto the body by means of bushes the axes of which, if extended, converge at a point on the longitudinal axis of the vehicle forwards of the bushes. The effect of this is to reduce steering effects caused by lateral forces on the rear wheels during cornering. It is also known, for example from WO97/12773 to provide snubbing at the end of axial travel of the bushes. However it can be a problem with known snubbing arrangements that they produce significant over-steer.

The present invention provides a rear suspension system for a vehicle comprising a pair of longitudinal arms each having a front end pivotably connected to a sprung part of the vehicle by means of a bush and a rear end having one of the vehicle rear wheels mounted on it, and a transverse bar interconnecting the longitudinal arms, wherein the bushes are arranged to allow lateral movement of the rear ends of the longitudinals relative to the sprung part and snubbing means is provided including opposed faces which come into contact under high lateral forces on the wheels to limit said lateral movement, wherein the snubbing faces are inclined to the longitudinal axis of the vehicle so that, when the snubbing means comes into effect due to lateral forces on the rear wheels, it tends to counteract the steering effects produced by those forces.

Preferred embodiments of the present invention will now be described by way of example only with reference to the accompanying drawings in which:
Figure 1 is a schematic plan view of a rear suspension according to a first embodiment of the invention, and
Figure 2 is a schematic plan view of a rear suspension according to a second embodiment of the invention.

A torsion bar rear suspension comprises a pair of longitudinal arms 10, 12, one on either side of the vehicle, each having one of the vehicle's rear wheels 14 mounted on its rear end 16 and having its front end 18 pivotably connected to a sprung part 20 of the vehicle, generally the body, or the chassis if the vehicle has one. A transverse torsion bar 22 interconnects the two longitudinal arms 10, 12 having each end attached to a respective one of them at a point between its front and rear ends 18, 16, thereby forming an H-shaped frame 23.

The connection between the front ends 18 of the longitudinal arms 10, 12 and the sprung part of the vehicle 20 is made by means of bushes 24 each of which has an outer metal sleeve 26 rigidly connected by welding to the longitudinal arm and an inner metal sleeve rigidly mounted on a bolt on the sprung part of the vehicle 20, and an elastomeric bushing between the inner and outer sleeves which allows them to move relative to each other and thereby allows movement of the front ends 18 of the longitudinal arms relative to the sprung part of the vehicle.

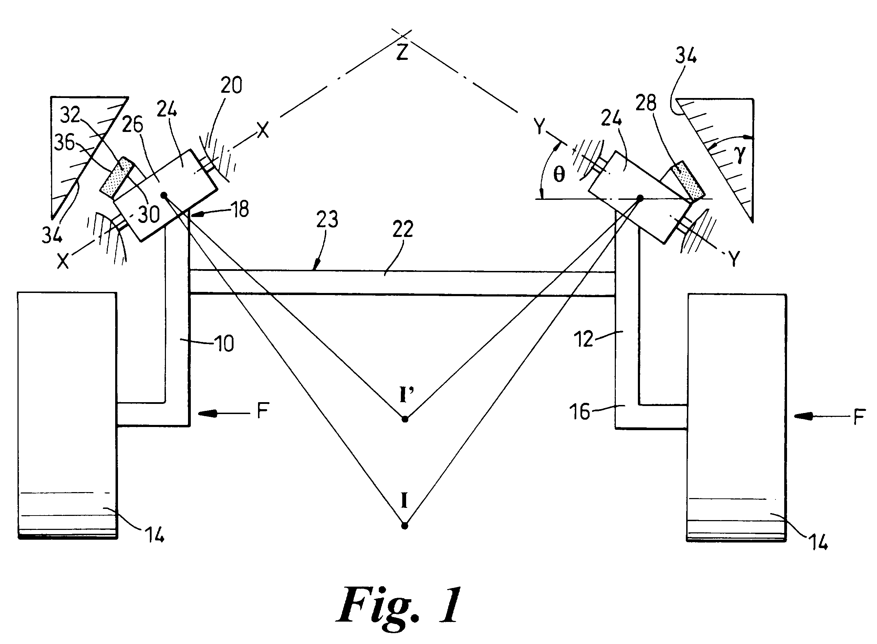

The bushes 24 have their axes X-X, Y-Y inclined at an angle θ to the transverse axis Z-Z of the vehicle so that they converge towards a point Z which is on the longitudinal axis of the vehicle forwards of the bushes 24. The effect of this is well known, and is to control movement of the frame 10, 12, 22 when the wheels 14 experience a lateral force F during cornering of the vehicle. Basically the force F applied to the wheels, which is towards the left if the vehicle is cornering to the left as shown in Figure 1, sets up a moment in the frame which tends to rotate it clockwise as seen in Figure 1 as the longitudinal arms 10, 12 tend to rotate about their front ends 18. However, the force F also tends to move the frame 10, 12, 22 to the left as seen in Figure 1. Because the bushes 24 have lower resilience along their axis X-X, Y-Y than in directions normal to it, they tend to cause the right longitudinal arm 12 to move forwards and the left longitudinal arm 10 to move backwards. This produces a moment in the anti-clockwise direction, as seen in Figure 1 which counteracts the clockwise moment described above. The result of this is that the frame 23 moves generally sideways without substantial rotation under the influence of the lateral forces F on the wheels 14. In practice the orientation and characteristics of the bushes can be tuned so as to give the desired steering effects during cornering, which may include slight under-steer or over-steer. Their arrangement defines an elastic centre I' about which the frame 23 rotates under the influence of lateral forces F on the wheels. If this elastic centre I' is on the axis of the rear wheels 14, as shown in Figure 1, then the lateral forces produce pure lateral motion of the frame 23 without rotation. If it is in front of the wheel axis this results in over-steer on cornering, and if it is behind under-steer is produced on cornering. Generally the elastic centre I' will not coincide with the geometric centre I which is the point of intersection of the lines through the centre of the bushes 24 normal to their axes.

Each of the bushes 24 has a snubber 28 formed as part of its outer sleeve 26 which has a flat surface 30 with an elastomeric pad 32 on it, the pad having a front surface 34 which forms a first snubbing surface. This surface 30 is substantially vertical and inclined to the longitudinal axis of the vehicle by an angle γ. The planes in which the snubbing surfaces lie therefore converge at a substantially vertical line on the central axis of the vehicle forwards of the bushes 24. A parallel co-operating second snubbing surface 34 is provided on the vehicle body 20 just outboard of the first snubbing surface on each bush 24. The gap between the two snubbing surfaces 34, 36 is such that, in the absence of cornering forces, or under low to average cornering loads they do not come into contact, and the front ends of the longitudinal arms 10, 12 are free to move laterally on the bushes 24. Under these conditions the steering effects of the system will be controlled by the bushes as described above. However, when the lateral forces on the rear wheels reach a sufficiently high magnitude the front surface 36 of the elastomeric pad 32 on one side of the vehicle comes into contact with the snubbing surface 34 on the body, thereby rapidly increasing the resistance to lateral movement of the front ends of the longitudinal arms 10, 12. Under these circumstances the bushes 24 are no longer able to provide the desired steering effects, and if the snubbing devices simply limited further lateral movement of the front ends of the arms 10, 12 they could produce over steer which increased rapidly with lateral acceleration. However, because of the angle y of the snubbing faces 34, 36, the longitudinal on the inside of the corner is urged towards the rear of the vehicle, by the contact between the snubbing surfaces 34, 36, relative to the longitudinal on the outside of the corner and relative to the sprung part 20 of the vehicle. This tends to cause the frame 23 to rotate in an anti-clockwise direction, i.e. in the opposite direction to that in which the lateral force F on the wheels tends to cause it to rotate. This effect therefore counteracts the over-steer effect at high lateral accelerations, and, like the orientation of the bushes for lower lateral accelerations, can be tuned to a certain extent so as to effectively eliminate steering effects, or so as to provide controlled under-steer or reduced over-steer.

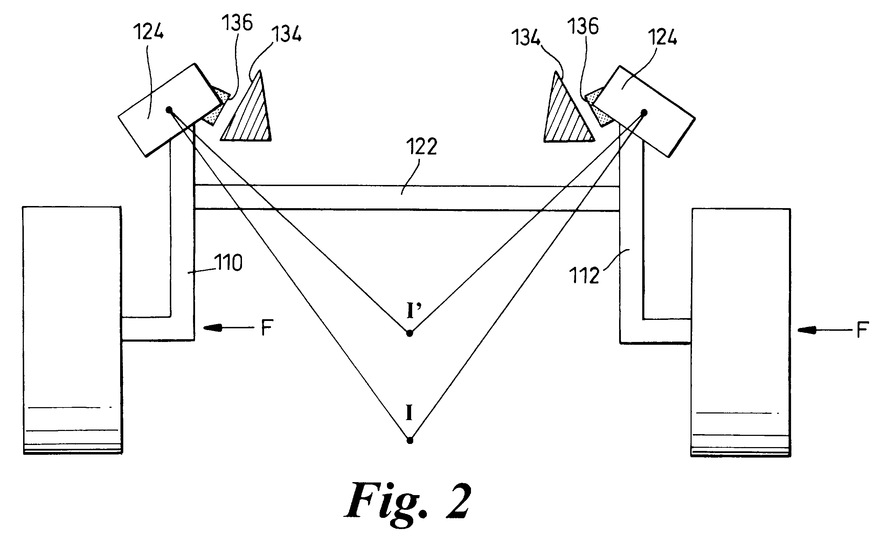

Figure 2 shows an alternative arrangement to that shown in Figure 1. Parts corresponding to those in Figure 1 are given the same reference numeral preceded by a 1. The only difference in this second embodiment of the invention over the first is that the snubbing faces 130 on the bushes 124 are mounted on the inboard side rather than the outboard side, and those 134 on the body are facing them, on the inboard side of the bushes. The angle of inclination of the snubbing surfaces 134, 136 relative to the vehicle body is substantially the same as in the first embodiment. The effect of this arrangement is the same as the first embodiment except that, under high lateral accelerations during cornering, the front end of the longitudinal arm 112 on the outside of the corner, i.e. the right arm 112 during a left hand bend as shown, is urged forwards by the snubbing device. This has the same effect on steering as the rearward movement of the left arm 10 in the first embodiment, tending to cause rotation of the frame 123 in the same direction.

It will be appreciated that the snubbing arrangement of this invention can be used with a variety of bush arrangements. For example in is known from FR2434965 and DE2748193 to provide bushes which have their central axes aligned with the transverse axis of the vehicle, but which never the less are arranged to produce the fore-aft forces required under cornering to reduce over-steer. The snubbing arrangement of the invention could be incorporated into these type of bushes as well as into the angled bushes described. Indeed in some circumstances where over steer at lower lateral accelerations is not a serious problem, the snubbing arrangement of the invention could be combined with simple transversely orientated bushes.

## Claims

1. A rear suspension system for a vehicle comprising a pair of longitudinal arms (10, 12) each having a front end (18) pivotably connected to a sprung part (20) of the vehicle by means of a bush (24) and a rear end (16) having one of the vehicle rear wheels (14) mounted on it, and a transverse bar (22) interconnecting the longitudinal arms, wherein the bushes are arranged to allow lateral movement of the rear ends of the longitudinals relative to said sprung part and snubbing means (28, 34) is provided including opposed faces (34, 36) which come into contact under high lateral forces on the wheels to limit said lateral movement, characterized in that the snubbing faces are inclined to the longitudinal axis (Z - Z) of the vehicle so that, when the snubbing means comes into effect due to lateral forces on the rear wheels, it tends to counteract the steering effects produced by those forces.

2. A suspension system according to claim 1 wherein the snubbing means (28, 34) includes two snubbing devices each arranged to limit lateral movement of the front end (18) of a respective one of the longitudinals (10, 12).

3. A suspension system according to claim 2 wherein each of the snubbing devices (28, 34) includes a first snubbing face (36) on the respective longitudinal and a second snubbing face (34) on said sprung part of the vehicle.

4. A suspension system according to claim 3 wherein each of the first snubbing faces (36) is formed on a respective one of the bushes.

5. A suspension system according to claim 3 or claim 4 wherein, in the absence of lateral forces on the wheels, there is a gap between the two snubbing faces (34, 36) of each snubbing device.

6. A suspension system according to any one of claims 2 to 5 wherein at least one of each pair of snubbing faces (34, 36) is formed on a resilient snubbing element (32).

7. A suspension system according to any one of claims 2 to 6 wherein two corresponding snubbing faces (34 or 36), each on a respective one of the two snubbing devices, are each in a plane which is angled to the longitudinal axis (Z-Z) of the vehicle so that the planes converge at a line forward of the bushes.

8. A suspension system according to any one of claims 2 to 7 wherein each snubbing device (28, 34) is arranged to limit lateral movement of the front end (18) of the respective longitudinal away from the central longitudinal axis (Z-Z0 of the vehicle.

9. A suspension system according to any one of claims 2 to 8 wherein the two faces (34, 36) of each snubbing device are substantially parallel.

10. A suspension system according to any one of claims 2 to 9 wherein each of the snubbing devices (28, 34) is arranged to produce a rearwards force on the respective longitudinal (10, 12) in response to lateral movement thereof in an outboard direction.

11. A suspension system according to any one of claims 2 to 10 wherein each of the snubbing devices is arranged to produce a forwards force on the respective longitudinal (10, 12) in response to lateral movement thereof in an inboard direction.
